# EUROPÄISCHE PATENTSCHRIFT

(11) **EP 2 682 041 B1**
(45) Veröffentlichungstag und Bekanntmachung des Hinweises auf die Patenterteilung: **31.07.2019**
(21) Anmeldenummer: 13003219.6
(22) Anmeldetag: 24.06.2013
(51) Int. Cl.: A47L 15/48, A47L 15/42, A47L 15/00

(54) **Geschirrspülmaschine**
Dishwasher
Lave-vaisselle

(30) Priorität: 06.07.2012 DE 102012013322
(43) Veröffentlichungstag der Anmeldung: 08.01.2014
(73) Patentinhaber: Eichenauer Heizelemente GmbH & Co. KG, 76870 Kandel (DE)
(72) Erfinder: Grunewald, Jérôme, 76857 Silz (DE)
(74) Vertreter: Busch, Tobias

(56) Entgegenhaltungen:
- EP-A1- 2 301 409
- WO-A1-2005/053504

## Beschreibung

Die Erfindung betrifft eine Geschirrspülmaschine mit einem Spülraum und einer Einrichtung zur Förderung von feuchter Luft aus dem Spülraum zu einer Trocknungseinrichtung, wobei die Trocknungseinrichtung mindestens eine Sorptionseinheit aufweist.

In der WO 2010/012709 A1 und der WO 2010/052116 A1 werden Geschirrspülmaschinen mit einem Sorptionstrocknungssystem beschrieben. Zum Trocknen von Geschirr wird feuchte Luft aus dem Spülraum durch eine Trocknungseinrichtung geleitet. Dazu ist der Spülraum mit mindestens einer Passage mit der Trocknungseinrichtung verbunden, um einen Luftaustausch zu erzeugen.

In der DE 103 53 774 A1 wird eine Geschirrspülmaschine beschrieben, die eine Sorptionskolonne aufweist. Die Sorptionskolonne wird zur Trocknung des Geschirrs verwendet. Die zur Desorption eingesetzte Wärmeenergie wird zur Erwärmung der im Spülbehälter befindlichen Spülflotte und des Geschirrs verwendet.

Darüber hinaus sind aus der DE 10 2008 054 834 A1 Haushaltsgeräte bekannt, die nach dem Prinzip einer Wärmepumpe arbeiten. Die Haushaltsgeräte weisen ein nach außen gasdicht geschlossenes System mit einer Kaltseite und einer Warmseite auf.

Die EP 2 301 409 A1 beschreibt einen Geschirrspüler, der einen Sorptionstrockner besitzt. Der Sorptionstrockner weist eine Sorptionskammer auf, in welcher ein Sorptionsmedium angeordnet ist. Um die Sorptionskammer herum ist ein Wasserbehälter angeordnet.

Die Trocknungseinrichtung umfasst eine Sorptionseinheit, die ein reversibel dehydrierbares Material aufweist, wobei vorzugsweise ein zeolithisches Material eingesetzt wird. Nach dem Spülprozess, während des Programmschritts "Trocknen", nimmt das zeolithische Material Wasserdampf aus der feuchten Luft des Spülraums auf, die die Sorptionseinheit durchströmt.

Bei der Adsorption von Wasserdampf während dieses Programmschritts erwärmt sich das zeolithische Material. Nach der Sorptionseinheit wird die nun trockene und warme Luft wieder in den Spülraum geleitet. Durch Einsatz der Trocknungseinrichtung weist sie nun eine geringere Luftfeuchte auf, kann sich wieder mit Wasserdampf bis maximal zur Sättigung beladen und wird dann erneut über die Trocknungseinrichtung geführt. Durch Einsatz solcher Trocknungseinrichtungen wird die Trocknungszeit des Geschirrs erheblich verkürzt.

Das in der Sorptionseinheit eingesetzte zeolithische Material muss nach dem Trocknungsschritt wieder regeneriert werden. Diese Regeneration wird auch als Desorption bezeichnet. Dabei wird das zeolithische Material stark erwärmt, sodass der an der Oberfläche gebundene Wasserdampf desorbiert wird. Dieser Regenerationsprozess erfolgt erst kurz vor dem nächsten heißen Spülvorgang, da das Zeolithmaterial ansonsten Wasserdampf aus der Umgebungsluft aufnimmt und dadurch ein geringes Adsorptionsvermögen hat.

Der desorbierte heiße Wasserdampf wird in den Spülraum geleitet und kondensiert dort an der Geschirroberfläche und den Wänden des Spülraumes.

Durch Nutzung dieser Kondensationswärme wird Energie eingespart. Der Energieaufwand zur Erwärmung des Spülwassers verringert sich dadurch.

Geschirrspülmaschinen mit einem Sorptionstrocknungssystem gehören zu den energieeffizientesten der Welt. Aufgrund ihrer hohen Energieeffizienz erhalten solche Geschirrspülmaschinen sehr gute Energieverbrauchskennzeichnungen, die für viele Verbraucher ein wichtiges Argument für eine Kaufentscheidung sind.

Während der Regenerationsphase wird nicht nur der Wasserdampf desorbiert, sondern auch das zeolithische Material selbst aufgeheizt. Nach der Regenerationsphase kühlt sich das Sorptionsmaterial nur langsam ab, indem es Wärme an die Umgebung abgibt.

Aufgabe der Erfindung ist es, eine Geschirrspülmaschine zur Verfügung zu stellen, die gegenüber herkömmlichen Maschinen mit Sorptionstrocknungssystemen eine weitere Steigerung der Energieeffizienz aufweist und bei der die Abkühlung des Sorptionsmaterials beschleunigt wird. Die Trocknungseinrichtung soll möglichst schnell wieder einsatzbereit sein. Dabei soll die Trocknungseinrichtung ein möglichst großes Aufnahmevermögen für Feuchte aus dem Spülraum aufweisen, sodass das jeweilige Spülprogramm verkürzt wird. Zudem soll sich der Geschirrspüler durch eine einfache und kostengünstige Produktionsweise auszeichnen. Weiterhin soll die Integration des erfindungsgemäßen Systems mit einem möglichst geringen Aufwand erfolgen.

Diese Aufgabe wird erfindungsgemäß dadurch gelöst, dass die Trocknungseinrichtung mindestens einen Wärmetauscher zur Wärmeübertragung von der Sorptionseinheit auf Spülwasser und/oder Frischwasser umfasst.

Erfindungsgemäß wird ein Wärmetauscher eingesetzt, der nach der Regeneration das zeolithische Material kühlt und gleichzeitig Spülwasser aufheizt. Dadurch geht die in dem Sorptionsmaterial gespeicherte Wärme nicht an die Umgebung verloren, sondern wird zur Aufheizung des Spülwassers genutzt. Der Wärmetauscher sorgt dafür, dass sich das Sorptionsmaterial schneller abkühlt und somit die Trocknungseinrichtung zu einem früheren Zeitpunkt wieder einsatzbereit ist.

Eine Einrichtung fördert feuchte Luft aus dem Spülraum zu der Trocknungseinrichtung. Die getrocknete Luft wird zurück in den Spülraum gefördert. Die Einrichtung kann beispielsweise als Lüfter, Gebläse oder Ventilator ausgeführt sein kann. Es ist auch denkbar, dass mehrere Fördereinrichtungen zum Einsatz kommen. Die Einrichtung kann beispielsweise in einem Bereich angeordnet sein, in dem die feuchte Luft vom Spülraum zu der Trocknungseinrichtung strömt. Alternativ oder ergänzend kann die Einrichtung auch in einem Bereich angeordnet sein, im dem die trockene Luft von der Trocknungseinrichtung zum Spülraum strömt. Die Einrichtung kann als eigenständiges Baumodul ausgeführt sein, an das Rohre zur Luftführung angeschlossen werden. Es ist auch denkbar, dass die Einrichtung in ein Rohr und/oder den Spülraum integriert ist. Bei einer besonders günstigen Variante der Erfindung ist die Einrichtung in die Trocknungseinrichtung integriert. Dadurch wird eine kompakte Baueinheit gebildet.

Erfindungsgemäß umfasst die Trocknungseinrichtung zusätzlich zur Sorptionseinheit einen Wärmetauscher. Prinzipiell wäre es dabei auch möglich, den Wärmetauscher neben der Sorptionseinheit anzuordnen. Als besonders vorteilhaft erweist es sich jedoch den Wärmetauscher zumindest teilweise in der Sorptionseinheit anzuordnen. Vorzugsweise ist der Wärmetauscher vollständig in der Sorptionseinheit angeordnet.

Durch Integration des Wärmetauschers in das Zeolithbett wird der Wirkungsgrad der Wärmeübertragung vom Zeolith auf das Spülwasser erheblich verbessert. Dabei erweist es sich als günstig, wenn zwischen Zeolith und Wärmetauscher eine möglichst große Austauschfläche besteht. Zudem ist es vorteilhaft, wenn der Wärmetauscher aus einem möglichst gut wärmeleitenden Material gefertigt ist.

Der Wärmetauscher kann als Rohrschlange ausgeführt sein, die innerhalb der Sorptionseinheit verläuft. Da zeolithisches Material ein relativ schlechter Wärmeleiter ist, ist es günstig, wenn eine große Kontaktfläche zwischen Wärmetauscher und Sorptionsmaterial geschaffen wird, sodass ein guter Wärmetransport gewährleistet wird.

Der Wärmetauscher wird von Spülwasser durchflossen. Spülwasser und Sorptionsmaterial sind räumlich voneinander getrennt. Es erfolgt eine indirekte Wärmeübertragung. Wärmetauscher dieser Art werden auch als Rekuperatoren bezeichnet.

Wird eine Rohrschlange als Wärmetauscher eingesetzt, so trennen die Rohrwände das Spülwasser im Inneren von dem das Rohr umgebenden Sorptionsmaterial. Vorzugsweise ist die Wandstärke möglichst gering, um den Wärmeaustausch zu verbessern.

Als besonders günstig erweist es sich, wenn die Geschirrspülmaschine eine Verbindung des Wärmetauschers mit dem Spülraum aufweist durch die Kreislauf-Spülwasser strömt. Bei der Verbindung kann es sich um ein Rohr handeln. Vorzugsweise ist die Verbindung am Sumpf der Geschirrspülmaschine angeschlossen. Von dort wird das Kreislauf-Spülwasser mittels einer Pumpe durch den Wärmetauscher gefördert. Im Wärmetauscher erwärmt sich das Kreislauf-Spülwasser während sich das Sorptionsmaterial gleichzeitig abkühlt.

Nach Durchströmung des Wärmetauschers führt eine weitere Verbindung zurück in den Spülraum. Vorzugsweise handelt es sich dabei ebenfalls um ein Rohr, welches beispielsweise die Spüldüsen mit Wasser versorgt.

Alternativ oder ergänzend zu Kreislauf-Spülwasser kann dem Wärmetauscher auch Frisch-Spülwasser zugeführt werden. Bei dieser Variante weist die Geschirrspülmaschine eine Verbindung des Wärmetauschers mit einem Frischwasseranschluss auf. Das Frisch-Spülwasser durchströmt den Wärmetauscher und wird anschließend in den Spülraum geführt. Vorteilhaft gibt es hierbei weniger Korrosionsprobleme, dadurch könnte der Wärmetauscher auch in einem weniger korrosionsbeständigen Material, wie beispielsweise Aluminium, ausgeführt werden.

Um den Zeolith möglichst schnell abzukühlen und die darin gespeicherte Wärme zu nutzen, wird das Frischspülwasser durch den Wärmetauscher geleitet und danach in den Spülraum geleitet.

Der Einsatz von kaltem Frisch-Spülwasser trägt zu einer Steigerung der Adsorptionskapazität der Sorptionseinheit bei, da das Sorptionsmaterial stärker gekühlt wird. Je kälter das Sorptionsmaterial ist, desto größer ist dessen Aufnahmevermögen.

Durch den erfindungsgemäßen Einsatz des Wärmetauschers in der Trocknungseinrichtung wird somit zum einen Energie zur Aufheizung des Spülwassers eingespart und zum anderen das Aufnahmevermögen der Sorptionseinheit verbessert. Dies führt zu einer merklichen Energieeffizienzsteigerung und somit zu einer besseren Klassifizierung der erfindungsgemäßen Geschirrspülmaschinen.

Bei einer Variante der Erfindung wird zunächst Kreislauf-Spülwasser durch den Wärmetauscher geleitet werden. Soll die Sorptionseinheit dann noch weiter abgekühlt werden, kann anschließend Frisch-Spülwasser, das gegenüber dem Kreislaufspülwasser eine geringere Temperatur hat, durch den Wärmetauscher geleitet werden.

Bei einer besonders vorteilhaften Ausführung der Erfindung überwachen Temperaturfühler die Spülwassertemperatur bzw. die Temperatur des Sorptionsmaterials und stellen mittels einer Steuereinrichtung das optimale Verhältnis von Frisch-Spülwasser und Kreislauf-Spülwasser ein. Bei der Steuereinrichtung kann es sich beispielsweise um eine speicherprogrammierbare Steuerung oder um einen Regler handeln.

Zur Regeneration muss das Sorptionsmaterial erwärmt werden. Bei einer Variante der Erfindung wird dazu die Sorptionseinheit von heißer Luft durchströmt. Dabei ist ein Heizelement vor dem Lufteinlass in die Sorptionseinheit angeordnet, das die Luft erwärmt.

Bei einer anderen Variante der Erfindung ist das Heizelement in der Sorptionseinheit angeordnet und erwärmt unmittelbar das Sorptionsmaterial. Vorzugsweise wird dabei ein offenes Drahtheizelement eingesetzt. Der Wasserdampf desorbiert und wird vorzugsweise von einer Luftströmung abgeführt und von dieser in den Spülraum getragen.

Es kann hier auch auf einen Zwangsumlauf durch ein Gebläse verzichtet werden.

Bei einer besonders bevorzugten Ausgestaltung stehen das Heizelement und der Wärmetauscher in direkter wärmeleitender Verbindung. Dabei sind sie beispielsweise entlang ihrer Längsseite verbunden. Vorteilhaft lässt sich so die im Heizelement selbst gespeicherte Wärme zur Erwärmung des Spülwassers nutzen, da das Heizelement selbst eine Wärmekapazität aufweist und nach dem Desorptionsvorgang noch eine hohe Temperatur besitzt.

Die Geschirrspülmaschine weist zumindest eine Spülwasserheizung auf, die das Spülwasser ergänzend oder alternativ zum Wärmetauscher erwärmt. Dieses Heizelement ist vorzugsweise, in Strömungsrichtung des Spülwassers gesehen, nach dem Wärmetauscher angeordnet. Reicht die Wärme, die von dem Sorptionsmaterial auf das Spülwasser übertragen wird nicht aus, so wird über die nachgeschaltete Spülwasserheizung zusätzlich Energie zugeführt, um die gewünschte Temperatur zu erreichen. Die Spülwasserheizung umfasst zumindest ein elektrisches Heizelement.

Als besonders vorteilhaft erweist es sich, wenn die Geschirrspülmaschine eine Baueinheit aufweist, welche die Trocknungseinrichtung umfasst. Vorzugsweise weist die Baueinheit eine Ummantelung auf und bildet ein kompaktes Bauteil, das als Ganzes bei der Montage der Spülmaschine eingebaut wird. Die Ummantelung weist die dafür notwendigen wasserführenden und/oder elektrischen Anschlüsse auf.

Dabei erweist es sich als günstig, wenn die Baueinheit eine Isolierung nach außen aufweist. Die Isolierung kann entweder innerhalb der Ummantelung oder außen um die Ummantelung angeordnet sein.

Als Ummantelung kann ein Behälter oder ein Gehäuse, beispielsweise aus einem Kunststoff zum Einsatz kommen. Prinzipiell kann die Isolierung auch von der Ummantelung selbst gebildet werden, wobei beispielsweise ein wärmeisolierender Kunststoff als Material verwendet wird.

Bei einer Variante der Erfindung wird dieses nachgeschaltete Heizelement zur Aufwärmung des Spülwassers in der Trocknungseinrichtung angeordnet. Bei dieser Variante bildet die Trocknungseinrichtung eine Baueinheit, die neben der Sorptionseinheit und dem Wärmetauscher zusätzlich das Heizelement zur Aufwärmung des Spülwassers umfasst. Bevorzugt befindet sich zwischen der Sorptionseinheit und dem zusätzlichen Heizelement eine Wärmeisolationsschicht.

Ergänzend oder alternativ hierzu kann auch die Pumpe zur Förderung des Kreislauf-Spülwassers und/oder Frisch-Spülwassers in der Trocknungseinrichtung angeordnet sein. Dadurch entsteht eine kompakte Baueinheit, welche alle zur Trocknung bzw. zur Spülwasseraufwärmung erforderlichen Bauteile umfasst.

In diese Baueinheit kann zudem ein Gebläse zur Förderung der feuchten Luft aus dem Spülraum integriert sein, so dass die Trocknungseinrichtung neben der Sorptionseinheit und dem Wärmetauscher auch dieses Gebläse umfasst.

Der Spülraum wird von einem Spülbehälter gebildet. Der Spülbehälter ist vorzugsweise quaderförmig und umfasst neben seinen vier Seitenwänden auch einen Deckel und einen Boden.

Bei einer besonders günstigen Ausführung der Erfindung ist zumindest ein Teil des Bodens des Spülbehälters in die Trocknungseinrichtung integriert. So kann dieser Teil des Bodens des Spülbehälters gleichzeitig der Deckel der Trocknungseinrichtung sein. Bei dieser Variante der Erfindung wird die als kompakte Baueinheit ausgeführte Trocknungseinrichtung von unten montiert und bildet auf diese Weise zumindest einen Teil des Bodens und/oder den Sumpf des Spülbehälters.

Zum Betrieb der Geschirrspülmaschine können unterschiedliche Spülprogramme ausgewählt werden. Jedes Spülprogramm besteht aus einer Anzahl von Programmschritten, die nacheinander durchlaufen werden. Beispielsweise kann ein derartiges Programm aus den Programmschritten Vorspülen, Reinigen, Zwischenspülen, Klarspülen und Trocknen bestehen.

Insbesondere beim Programmschritt "Reinigen" findet eine Erwärmung von Spülflüssigkeit statt. Das Verfahren zum Erwärmen des Spülwassers umfasst eine erste Phase, während der die Desorption durchgeführt wird. Mittels eines Heizelements wird das Sorptionsmaterial entweder direkt oder indirekt über heiße Luft erwärmt. Der ausgetriebene Wasserdampf wird in den Spülraum geleitet und kondensiert dort. Vorzugsweise findet eine Vermischung mit bereits im Spülraum befindlicher Flüssigkeit statt, wobei eine Erwärmung der Gesamtflüssigkeitsmenge im Spülraum erfolgt. Um eine bessere Vermischung zu gewährleisten, erweist es sich als günstig, wenn während dieses Vorgangs mit einer Pumpe das Spülwasser umgewälzt wird.

Erfindungsgemäß erfolgt nach der Desorption eine Erwärmung des Spülwassers mittels des Wärmetauschers. Das Spülwasser erwärmt sich während sich gleichzeitig das Sorptionsmaterial abkühlt. Somit geht die im Sorptionsmaterial gespeicherte Wärme nicht an die Umgebung verloren sondern dient der Erwärmung des Spülwassers.

Da die Spülflüssigkeit zu diesem Zeitpunkt bereits eine Temperatursteigerung erfahren hat, kann anschließend noch eine gewisse Frisch-Spülwassermenge durch den Wärmetauscher geleitet werden, um das Sorptionsmaterial weiter abzukühlen.

Reicht die zusätzliche Wärmezuführung mittels des Wärmetauschers nicht aus, so wird in einer separaten dritten Phase und/oder zeitgleich zur ersten und/oder zeitgleich zur zweiten Phase eine Spülwasserheizung zugeschaltet.

Die Spülwasserheizung kann in die Pumpe integriert sein. Alternativ kann neben der Pumpe ein separater Durchlauferhitzer oder eine Wasserheizung vorgesehen sein. Zusätzlich zu dieser Umwälzpumpe weist die Geschirrspülmaschine zum Entleeren des Spülraums vorzugsweise eine Laugenpumpe auf. Die Laugenpumpe steht in Verbindung mit dem Pumpensumpf und ist über eine Entsorgungsleitung an das Wasserentsorgungsnetz angeschlossen. Bevorzugt ist aber nur eine einzige Pumpe vorhanden.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Geschirrspülmaschine mit einem im Sorptionsmaterial integrierten Heizelement,
- Figur 2: eine Geschirrspülmaschine mit einer Umschaltvorrichtung für das Spülwasser,
- Figur 3: eine Geschirrspülmaschine mit einer Baueinheit welche die Trocknungseinrichtung und die Spülwasserheizung umfasst,
- Figur 4: eine Geschirrspülmaschine mit einer Baueinheit, welche die Trocknungseinrichtung, die Spülwasserheizung und das Gebläse umfasst,
- Figur 5: eine Geschirrspülmaschine mit einer Baueinheit, die die Trocknungseinrichtung, die Spülwasserheizung, das Gebläse und die Pumpe umfasst,
- Figur 6: eine Geschirrspülmaschine mit einer Baueinheit, die die Trocknungseinrichtung, die Spülwasserheizung, das Gebläse, die Pumpe und den Boden des Spülbehälters umfasst.

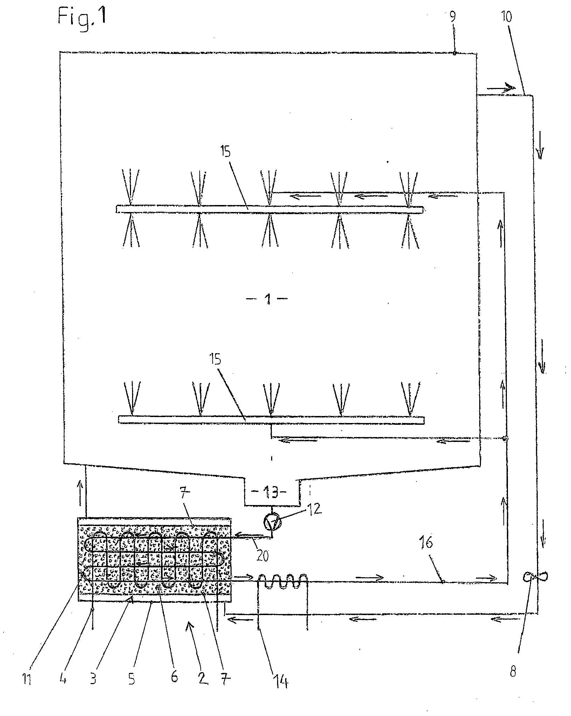

Figur 1 zeigt eine Geschirrspülmaschine mit einem Spülraum 1 und einer Trocknungseinrichtung 2. Bei der Trocknungseinrichtung 2 handelt es sich um ein Sorptionstrocknungssystem. Die Trocknungseinrichtung 2 umfasst eine Sorptionseinheit 3 und ein Heizelement 4 zur Desorption.

Die Sorptionseinheit 3 umfasst Sorptionsmaterial 6 und Siebböden 7, zwischen denen das Sorptionsmaterial angeordnet ist.

Im Ausführungsbeispiel wird als Sorptionsmaterial 6 ein Zeolith eingesetzt. Das Sorptionsmaterial 6 kann in unterschiedlicher Weise vorliegen. Beispielsweise kann es als zusammenhängender Festkörper oder als lose Schüttung vorliegen. Im Ausführungsbeispiel wird eine Zeolith-Materialschüttung eingesetzt. Die Materialschüttung besteht aus einem losen Granulat, vorzugsweise in Kügelchenform.

Dabei erweist es sich als günstig, wenn dieses Material auf einem Siebboden 7 angeordnet ist. Der Siebboden 7 kann beispielsweise als Geflecht, Drahtgitter oder Lochblech ausgeführt sein.

Das Sorptionsmaterial 6 wird von mindestens einem Siebboden 7 begrenzt, sodass das Sorptionsmaterial 6 am Herausfallen gehindert wird und gleichzeitig Luft durch die Schüttung an Sorptionsmaterial 6 hindurchströmen kann.

Feuchte Luft wird aus dem Spülraum 1 mittels einer Einrichtung 8 gefördert die beispielsweise als Lüfter, Gebläse oder Ventilator ausgeführt sein kann. Die Einrichtung 8 kann, wie in Fig. 1 dargestellt, in einem Bereich angeordnet sein, in dem die feuchte Luft vom Spülraum 1 zu der Trocknungseinrichtung 2 strömt. Alternativ oder ergänzend könnte die Einrichtung 8 aber auch in einem Bereich angeordnet sein, im dem die trockene Luft von der Trocknungseinrichtung 2 zum Spülraum 1 strömt. Die Einrichtung 8 kann als separates Bauteil ausgeführt sein, an das Rohre zur Luftführung angeschlossen werden. Es ist auch denkbar, dass die Einrichtung 8 in ein Rohr und/oder den Spülraum 1 integriert ist. Auch kann die Einrichtung 8 in die Trocknungseinrichtung 2 integriert sein.

Der Spülraum 1 wird von einem Spülbehälter 9 gebildet, der einen Auslass zum Anschluss eines Luftkanals 10 aufweist. Bei der in Figur 1 dargestellten Variante ist die Einrichtung 8 in dem Luftkanal 10 angeordnet. Die Einrichtung 8 fördert feuchte Luft aus dem Spülraum 1 zur Trocknungseinrichtung 2. Die feuchte Luft wird am Sorptionsmaterial 6 der Sorptionseinheit 3 absorbiert.

Dabei erwärmt sich das Sorptionsmaterial 6. Die getrocknete warme Luft strömt durch einen Einlass zurück in den Spülraum 1.

Nach dem Programmschritt "Trocknen" muss das Sorptionsmaterial 6 regeneriert werden. Dazu wird das Sorptionsmaterial 6 mittels des Heizelements 4 stark erhitzt, wobei Temperaturen zwischen 230 bis 250°C erreicht werden.

Bei einer besonders vorteilhaften Variante der Erfindung ist in der Sorptionseinheit 3 ein Temperaturfühler (nicht dargestellt) angeordnet, der die Temperatur des Sorptionsmaterials 6 erfasst.

Der ausgetriebene Wasserdampf wird in den Spülraum 1 geleitet und kondensiert dort.

Nach der Desorptionsphase ist das Sorptionsmaterial 6 noch stark aufgeheizt. Erfindungsgemäß weist die Trocknungseinrichtung 2 einen Wärmetauscher 11 auf, der Wärme von dem Sorptionsmaterial 6 auf Spülwasser überträgt.

Bei der in Figur 1 dargestellten Variante handelt es sich bei dem Wärmetauscher 11 um eine Rohrschlange, die in mehreren Bögen gewunden ist. In Figur 1 sind exemplarisch drei Bögen des Wärmetauschers 11 dargestellt. Die parallel zueinander angeordneten Rohre der Rohrschlange laufen bei dem in Figur 1 dargestellten Beispiel in horizontaler Richtung parallel zueinander. Bevorzugt kann die Rohrschlange zusätzlich Rippen aufweisen, um die Wärmeübertragung zu verbessern.

Alle Figuren zeigen eine besonders vorteilhafte Variante der Erfindung, bei der der Wärmetauscher 11 in der Sorptionseinheit 3 angeordnet ist. Der Wärmetauscher 11 ist dabei von Sorptionsmaterial 6 umgeben. Dadurch wird eine besonders gute Wärmeübertragung gewährleistet.

Mittels einer Pumpe 12 wird Spülwasser durch den Wärmetauscher 11 geleitet. Das Spülwasser wird aus dem Sumpf 13 abgezogen. Die Pumpe 12 fördert die sich im Sumpf 13 angesammelte Flüssigkeit durch den Wärmetauscher 11. Im Wärmetauscher 11 erwärmt sich die Flüssigkeit, indem Wärme von dem Sorptionsmaterial 6 auf das Spülwasser übertragen wird. Dadurch kühlt sich das Sorptionsmaterial 6 ab. Nach Durchlaufen des Wärmetauschers 11 wird das Spülwasser von einer Spülwasserheizung 14 zusätzlich erwärmt. Bei der Spülwasserheizung 14 handelt es sich um ein elektrisches Heizelement. Im Ausführungsbeispiel ist die Spülwasserheizung 14 als separater Durchlauferhitzer ausgeführt. Danach strömt das aufgeheizte Spülwasser zurück in den Spülraum 1. Dabei wird das Spülwasser Sprüharmen 15 zugeleitet. Die Sprüharme 15 weisen Düsen auf, über die das Spülwasser im Spülraum 1 verteilt wird.

Der Wärmetauscher 11 ist über eine Zuleitung 16 mit dem Spülraum 1 verbunden, über die das Spülwasser den Sprüharmen 15 zugeleitet wird.

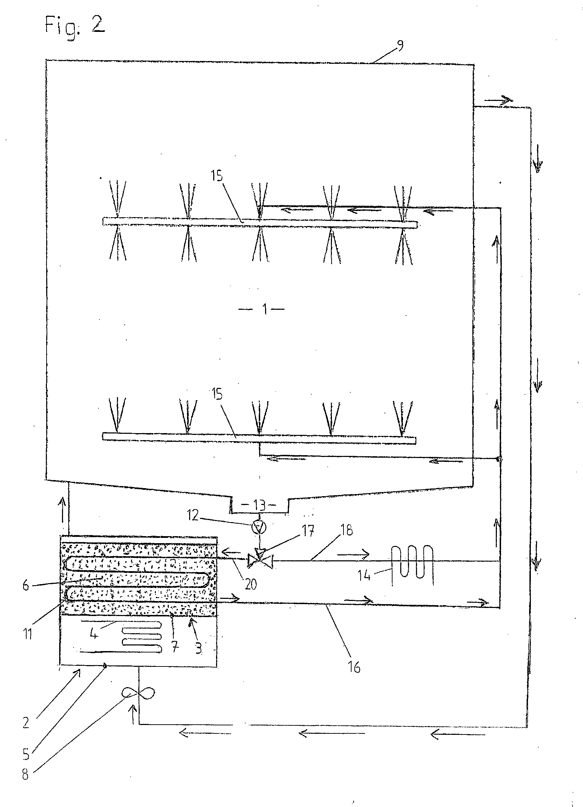

Figur 2 zeigt eine alternative Ausführungsform der Erfindung. Bei dieser Variante umfasst die Trocknungseinrichtung 2 eine Sorptionseinheit 3, in der ein Wärmetauscher 11 angeordnet ist und ein Heizelement 4 zur Desorption. Die Trocknungseinrichtung 2 ist von einem Behälter 5 umgeben. Bei der in Figur 2 dargestellten Variante ist das Heizelement 4 in dem Behälter 5, in Strömungsrichtung betrachtet, vor der Sorptionseinheit 3 angeordnet. Dabei handelt es sich um ein elektrisches Heizelement 4. Mittels der Einrichtung 8 wird ein Luftstrom erzeugt. Der Luftstrom wird in der Trocknungseinrichtung 2 von dem Heizelement 4 erwärmt, bevor er durch die Sorptionseinheit 3 strömt. Dadurch wird eine Luftheizung bereitgestellt. Die heiße Luft kann das Sorptionsmaterial 6 gleichmäßig durchströmen. Dadurch werden sogenannte "Hotspots", das heißt lokale Überhitzungsstellen im Sorptionsmaterial 6 vermieden.

Bei der Regeneration des Sorptionsmaterials 6 wird Wasser desorbiert und entweicht als Dampf. Der Wasserdampf wird mit dem Luftstrom, der durch die Sorptionseinheit 3 strömt, zurück in den Spülraum 1 gefördert, wo er kondensiert und seine Wärme abgibt.

Bei der in Figur 2 dargestellten Variante weist die Geschirrspülmaschine eine Umschaltvorrichtung 17 auf. Bei der Umschaltvorrichtung 17 handelt es sich um eine Mehrwegearmatur. Nachdem während des Desorptionsvorgangs das Wasser aus dem Sorptionsmaterial 6 ausgetrieben wurde, wird das Heizelement 4 ausgeschaltet. Die noch im Sorptionsmaterial 6 gespeicherte Wärme wird erfindungsgemäß mittels des Wärmetauschers 11 genutzt, der in der Sorptionseinheit 3 angeordnet ist. Dazu stellt die Umschaltvorrichtung 17 eine Verbindung zwischen dem Spülraum 1 und dem Wärmetauscher 11 über die Verbindung 20 her. Durch die Pumpe 12 wird Spülwasser aus dem Sumpf 13 des Spülraums 1 abgezogen und durch den Wärmetauscher 11 geleitet. Das Spülwasser erwärmt sich im Wärmetauscher 11, wobei sich gleichzeitig das Sorptionsmaterial 6 abkühlt. Nach dem Wärmetauscher 11 strömt das Spülwasser durch die Zuleitung 16 zurück in den Spülraum 1, wo es von Sprüharmen 15 verteilt wird. In der Sorptionseinheit 3 ist ein Temperaturfühler angeordnet (in Figur 2 nicht dargestellt), der seine Messdaten an eine Steuereinrichtung weiterleitet, die ebenfalls in den Figuren nicht gezeigt wird.

Nachdem sich das Sorptionsmaterial 6 auf eine bestimmte Temperatur abgekühlt hat, schaltet die Steuereinrichtung die Umschaltvorrichtung 17 derart, dass kein Spülwasser mehr durch den Wärmetauscher 11 strömt, sondern durch die elektrische Spülwasserheizung 14. Auf diese Weise wird das Spülwasser weiter aufgeheizt, bis es die für den Programmschritt "Reinigen" erforderliche Temperatur hat. Bei dieser Variante der Erfindung weist die Geschirrspülmaschine somit eine Bypassleitung 18 auf, durch die das Spülwasser bei Bedarf strömen kann, ohne dass es durch den Wärmetauscher 11 geleitet werden muss.

Das Verfahren zum Betrieb einer Geschirrspülmaschine gemäß der Variante nach Figur 2 umfasst folgende Schritte.

Erste Phase der Erwärmung des Spülwassers:
- Desorptionsheizelement 4 an,
- Fördereinrichtung 8 für feuchte Luft an,
- (Umschaltvorrichtung 17 leitet Spülwasser über Bypass 18: optional)
- (Pumpe 12 an: optional)
- Spülwasserheizung 14 aus,
- desorbierter Wasserdampf wird in Spülraum 1 geleitet (und vermischt sich dort mit dem umgewälzten Spülwasser: optional).

Zweite Phase der Erwärmung des Spülwassers:
- Umschaltvorrichtung 17 leitet Spülwasser durch den Wärmetauscher 11,
- Spülwasser erwärmt sich im Wärmetauscher 11 und kühlt Sorptionsmaterial 6 ab,
- nach Durchlaufen des Wärmetauscher 11 wird Spülwasser über Zuleitung 16 in den Spülraum 1 geführt.

Dritte Phase der Erwärmung des Spülwassers:
- Umschaltvorrichtung 17 leitet Spülwasser über Bypassleitung 18,
- Spülwasserheizung 14 an,
- Erwärmung des Spülwassers mittels Spülwasserheizung 14,
- Spülwasser wird auf die für den Programmschritt "Reinigen" erforderliche Temperatur gebracht.

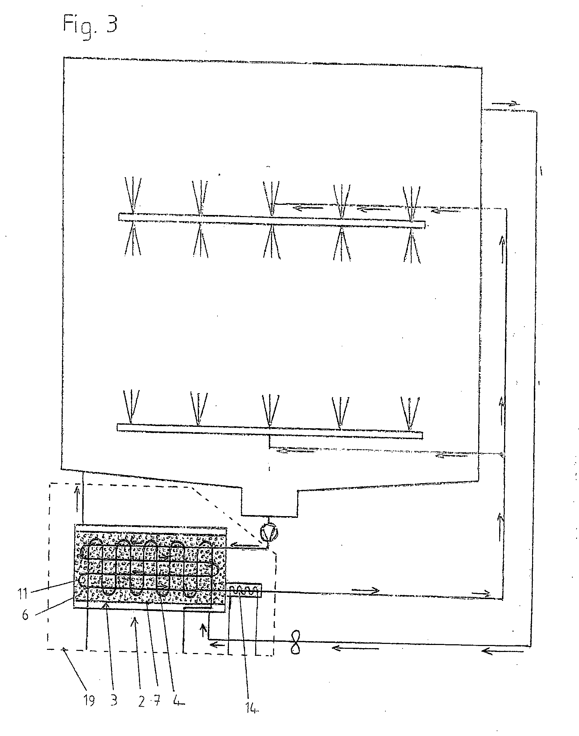

Figur 3 zeigt eine Variante, bei der die Geschirrspülmaschine eine Baueinheit 19 umfasst, die durch eine gestrichelte Linie dargestellt ist. Bei der Baueinheit 19 handelt es sich um eine kompakte Bodenbaugruppe, die im Ausführungsbeispiel unterhalb des Spülraums 1 der Geschirrspülmaschine angeordnet ist. Bei der in Figur 3 dargestellten Variante besteht die Baueinheit 19 aus der Trocknungseinrichtung 2 und der Spülwasserheizung 14. Die Trocknungseinrichtung 2 umfasst ihrerseits die Sorptionseinheit 3, in der der Wärmetauscher 11 angeordnet ist und das Heizelement 4. Die Sorptionseinheit 3 wiederum umfasst das Sorptionsmaterial 6 und kann als Schüttung zwischen zwei Siebböden 7 angeordnet sein. Die kompakte Baueinheit 19 hat den Vorteil, dass nicht alle Komponenten einzeln in die Geschirrspülmaschine eingebaut werden müssen, sondern die kompakte Baueinheit 19 als Ganzes bei der Montage in die Geschirrspülmaschine integriert wird.

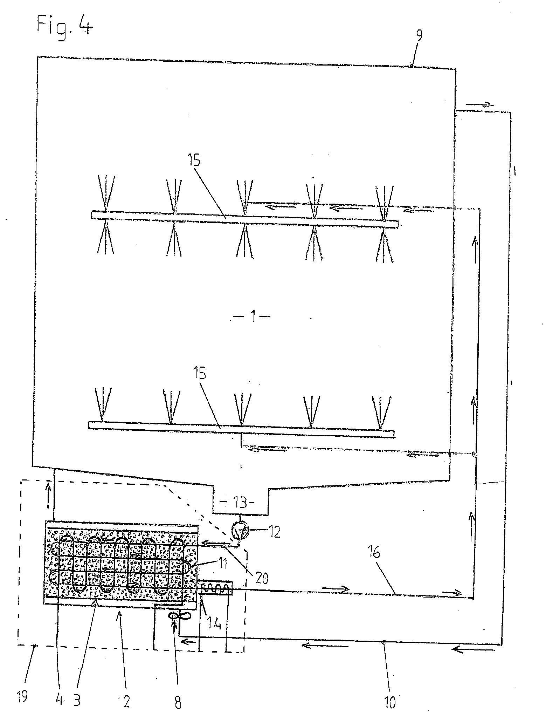

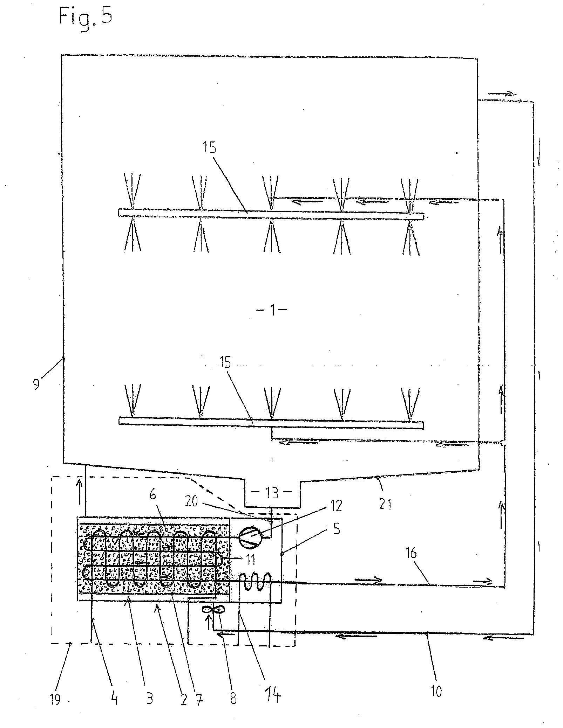

Figur 4 zeigt eine Variante, bei der die Baueinheit 19 zusätzlich die Einrichtung 8 umfasst. Figur 5 zeigt eine Variante, bei der die Baueinheit 19 zusätzlich die Pumpe 12 umfasst.

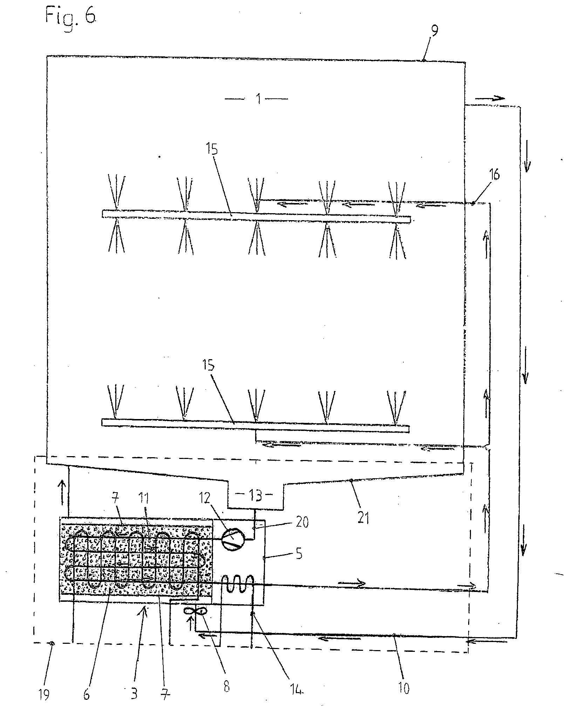

Bei der in Figur 6 dargestellten Variante umfasst die Baueinheit 19 zusätzlich zu der zuvor dargestellten Version den Boden 20 des Spülbehälters 9. Alternativ hierzu kann, bei einer nicht als Figur dargestellten Variante, auch lediglich der Sumpf 13 Bestandteil der Baueinheit 19 sein.

## Patentansprüche

1. Geschirrspülmaschine mit einem Spülraum (1) und einer Einrichtung (8) zur Förderung von feuchter Luft aus dem Spülraum (1) zu einer Trocknungseinrichtung (2), wobei die Trocknungseinrichtung (2) mindestens eine Sorptionseinheit (3) aufweist, wobei die Trocknungseinrichtung (2) mindestens einen Wärmetauscher (11) zur Wärmeübertragung von der Sorptionseinheit (3) auf Spülwasser und/oder Frischwasser umfasst, **dadurch gekennzeichnet, dass** der Wärmetauscher (11) zumindest teilweise in der Sorptionseinheit (3) angeordnet ist.

2. Geschirrspülmaschine nach Anspruch 1, **dadurch gekennzeichnet, dass** die Geschirrspülmaschine eine Verbindung (20) zwischen Spülraum (1) und Wärmetauscher (11) zur Durchströmung des Wärmetauschers (11) mit Kreislauf-Spülwasser aufweist.

3. Geschirrspülmaschine nach Anspruch 1 oder 2, **dadurch gekennzeichnet, dass** die Geschirrspülmaschine eine Verbindung zwischen einem Wasseranschluss und dem Wärmetauscher (11) aufweist zur Durchströmung des Wärmetauschers (11) mit Frisch-Spülwasser.

4. Geschirrspülmaschine nach einem der Ansprüche 1 bis 3, **dadurch gekennzeichnet, dass** zumindest ein Heizelement (4) im Sorptionsmaterial (6) zur Desorption angeordnet ist.

5. Geschirrspülmaschine nach Anspruch 4, **dadurch gekennzeichnet, dass** das Heizelement (4) als offenes Drahtheizelement ausgeführt ist.

6. Geschirrspülmaschine nach Anspruch 4 oder 5, **dadurch gekennzeichnet, dass** das Heizelement (4) und der Wärmetauscher (11) direkt wärmeleitet miteinander verbunden sind.

7. Geschirrspülmaschine nach einem der Ansprüche 1 bis 6, **dadurch gekennzeichnet, dass** die Geschirrspülmaschine eine Baueinheit (19) aufweist, welche die Trocknungseinrichtung (2) umfasst.

8. Geschirrspülmaschine nach Anspruch 7, **dadurch gekennzeichnet, dass** die Baueinheit (19) nach außen eine Isolierung aufweist.

9. Geschirrspülmaschine nach Anspruch 7 oder 8, **dadurch gekennzeichnet, dass** die Baueinheit (19) eine Spülwasserheizung (14) umfasst.

10. Geschirrspülmaschine nach einem der Ansprüche 7 bis 9, **dadurch gekennzeichnet, dass** die Baueinheit (19) ein Gebläse (8) zur Förderung eines Luftstroms durch die Sorptionseinheit (3) umfasst.

11. Geschirrspülmaschine nach einem der Ansprüche 7 bis 10, **dadurch gekennzeichnet, dass** die Baueinheit (19) eine Pumpe (12) zur Förderung von Spülwasser umfasst.

12. Geschirrspülmaschine nach einem der Ansprüche 7 bis 11, **dadurch gekennzeichnet, dass** die Baueinheit (19) einen Sumpf (13) der Spülmaschine umfasst.

13. Geschirrspülmaschine nach einem der Ansprüche 7 bis 12, **dadurch gekennzeichnet, dass** die Baueinheit (19) zumindest einen Teil eines Bodens (21) eines Spülbehälters (9) der Geschirrspülmaschine umfasst.

14. Verfahren zur Trocknung von feuchter Luft aus dem Spülraum (1) einer Geschirrspülmaschine nach einem der Ansprüche 1 bis 13 mit folgenden Phasen:
- Förderung von feuchter Luft aus dem Spülraum (1) über eine Sorptionseinheit (3),
- Adsorption von Feuchtigkeit aus der Luft in der Sorptionseinheit (3),
- Förderung der trockenen Luft zurück in den Spülraum (1),
- Erwärmung der Sorptionseinheit (3) zur Desorption von Wasser aus Sorptionsmaterial (6) und Kondensation von desorbiertem Wasserdampf im Spülraum (1),
- Durchströmung eines Wärmetauschers (11) mit Spülwasser und/oder Frischwasser zur Übertragung von Wärme von aufgeheiztem Sorptionsmaterial (6) auf Spülwasser und/oder Frischwasser.

## Claims

1. Dishwasher having a washing compartment (1) and having a device (8) for conveying moist air from the washing compartment (1) to a drying device (2), wherein the drying device (2) has at least one sorption unit (3), wherein the drying device (2) comprises at least one heat exchanger (11) for transferring heat from the sorption unit (3) to washing water and/or fresh water, **characterized in that** the heat exchanger (11) is arranged at least partially in the sorption unit (3).

2. Dishwasher according to Claim 1, **characterized in that** the dishwasher has a connection (20) between the washing compartment (1) and the heat exchanger (11) for the flow of circuit washing water through the heat exchanger (11).

3. Dishwasher according to Claim 1 or 2, **characterized in that** the dishwasher has a connection between a water connection and the heat exchanger (11) for the flow of fresh washing water through the heat exchanger (11).

4. Dishwasher according to one of Claims 1 to 3, **characterized in that** at least one heating element (4) is arranged in the sorption material (6) for desorption.

5. Dishwasher according to Claim 4, **characterized in that** the heating element is designed in the form of an open wire-type heating element.

6. Dishwasher according to Claim 4 or 5, **characterized in that** the heating element (4) and the heat exchanger (11) are connected to one another in a directly heat-conducting manner.

7. Dishwasher according to one of Claims 1 to 6, **characterized in that** the dishwasher has a structural unit (19), which comprises the drying device (2).

8. Dishwasher according to Claim 7, **characterized in that** the structural unit (19) is insulated to the outside.

9. Dishwasher according to Claim 7 or 8, **characterized in that** the structural unit (19) comprises a washing-water heating means (14).

10. Dishwasher according to one of Claims 7 to 9, **characterized in that** the structural unit (19) comprises a blower (8) for conveying an air stream through the sorption unit (3).

11. Dishwasher according to one of Claims 7 to 10, **characterized in that** the structural unit (19) comprises a pump (12) for conveying washing water.

12. Dishwasher according to one of Claims 7 to 11, **characterized in that** the structural unit (19) comprises a sump (13) of the dishwasher.

13. Dishwasher according to one of Claims 7 to 12, **characterized in that** the structural unit (19) comprises at least a part of a base (21) of a washing container (9) of the dishwasher.

14. Method for drying moist air from the washing compartment (1) of a dishwasher according to one of Claims 1 to 13, having the following phases:
- conveyance of moist air from the washing compartment (1) via a sorption unit (3),
- adsorption of moisture from the air in the sorption unit (3),
- conveyance of the dry air back into the washing compartment (1),
- heating of the sorption unit (3) for desorbing water from sorption material (6), and condensation of desorbed water vapour in the washing compartment (1),
- flow of washing water and/or fresh water through a heat exchanger (11) for transferring heat from heated sorption material (6) to washing water and/or fresh water.

## Revendications

1. Lave-vaisselle avec une chambre de rinçage (1) et un dispositif (8) pour le transport d'air humide hors de la chambre de rinçage (1) vers un dispositif de séchage (2), dans lequel le dispositif de séchage (2) présente au moins une unité de sorption (3), dans lequel le dispositif de séchage (2) comprend au moins un échangeur de chaleur (11) pour le transfert de chaleur de l'unité de sorption (3) à l'eau de rinçage et/ou à l'eau fraîche, **caractérisé en ce que** l'échangeur de chaleur (11) est disposé au moins en partie dans l'unité de sorption (3).

2. Lave-vaisselle selon la revendication 1, **caractérisé en ce que** le lave-vaisselle présente une communication (20) entre la chambre de rinçage (1) et l'échangeur de chaleur (11) pour la traversée de l'échangeur de chaleur (11) avec de l'eau de rinçage du circuit.

3. Lave-vaisselle selon une revendication 1 ou 2, **caractérisé en ce que** le lave-vaisselle présente une communication entre un raccord d'eau et l'échangeur de chaleur (11) pour la traversée de l'échangeur de chaleur (11) avec de l'eau de rinçage fraîche.

4. Lave-vaisselle selon l'une quelconque des revendications 1 à 3, **caractérisé en ce qu'**au moins un élément chauffant (4) est disposé dans la matière de sorption (6) pour la désorption.

5. Lave-vaisselle selon la revendication 4, **caractérisé en ce que** l'élément chauffant (4) est formé par un élément chauffant à fil ouvert.

6. Lave-vaisselle selon une revendication 4 ou 5, **caractérisé en ce que** l'élément chauffant (4) et l'échangeur de chaleur (11) sont assemblés l'un à l'autre en conduction de chaleur directe.

7. Lave-vaisselle selon l'une quelconque des revendications 1 à 6, **caractérisé en ce que** le lave-vaisselle présente une unité de construction (19), qui comprend le dispositif de séchage (2).

8. Lave-vaisselle selon la revendication 7, **caractérisé en ce que** l'unité de construction (19) présente une isolation vers l'extérieur.

9. Lave-vaisselle selon une revendication 7 ou 8, **caractérisé en ce que** l'unité de construction (19) comprend un chauffage de l'eau de rinçage (14).

10. Lave-vaisselle selon l'une quelconque des revendications 7 à 9, **caractérisé en ce que** l'unité de construction (19) comprend un ventilateur (8) pour transporter un courant d'air à travers l'unité de sorption (3).

11. Lave-vaisselle selon l'une quelconque des revendications 7 à 10, **caractérisé en ce que** l'unité de construction (19) comprend une pompe (12) pour le transport d'eau de rinçage.

12. Lave-vaisselle selon l'une quelconque des revendications 7 à 11, **caractérisé en ce que** l'unité de construction (19) comprend une cuvette (13) du lave-vaisselle.

13. Lave-vaisselle selon l'une quelconque des revendications 7 à 12, **caractérisé en ce que** l'unité de construction (19) comprend au moins une partie d'un fond (21) d'un réservoir de rinçage (9) du lave-vaisselle.

14. Procédé de séchage d'air humide provenant de la chambre de rinçage (1) d'un lave-vaisselle selon l'une quelconque des revendications 1 à 13, comprenant les phases suivantes:
- transport d'air humide hors de la chambre de rinçage (1) via une unité de sorption (3),
- adsorption d'humidité de l'air dans l'unité de sorption (3),
- transport d'air sec en retour vers la chambre de rinçage (1),
- chauffage de l'unité de sorption (3) pour la désorption d'eau hors de la matière de sorption (6) et condensation de la vapeur d'eau désorbée dans la chambre de rinçage (1),
- traversée d'un échangeur de chaleur (11) avec de l'eau de rinçage et/ou de l'eau fraîche pour le transfert de chaleur de la matière de sorption chauffée (6) à l'eau de rinçage et/ou à l'eau fraîche.
